# EUROPÄISCHE PATENTSCHRIFT

(11) **EP 3 785 900 B1**
(45) Veröffentlichungstag und Bekanntmachung des Hinweises auf die Patenterteilung: **07.06.2023**
(21) Anmeldenummer: 19194581.5
(22) Anmeldetag: 30.08.2019
(51) Int. Cl.: B32B 9/00, B32B 5/02, B32B 7/023, B32B 9/04, B32B 17/04, E04F 13/14, E04F 15/08

(54) **DÜNNSTEINERZEUGNIS**
LIGHTWEIGHT STONE PRODUCT
PRODUIT DE PIERRE FINE

(43) Veröffentlichungstag der Anmeldung: 03.03.2021
(73) Patentinhaber: Schiefergruben Magog GmbH & Co. KG, 57392 Schmallenberg (DE)
(72) Erfinder: GUNTERMANN, Georg, 57392 Schmallenberg (DE)
(74) Vertreter: Michalski Hüttermann & Partner Patentanwälte mbB

(56) Entgegenhaltungen:
- CN-A- 102 108 772
- DE-A1-102016 217 032
- DE-U1-202006 019 074

## Beschreibung

Die Erfindung betrifft ein biegsames Dünnsteinerzeugnis, ein Verfahren zu dessen Herstellung sowie dessen Verwendung.

Schiefer ist ein Steinmaterial, das gerne in der Dachdeckung aber auch als Oberfläche in Wohnräumen (z.B. Fußboden, Wand, Decke, Tischplatte, ...) eingesetzt wird. Ein wesentlicher Nachteil ist sein Gewicht. Weiterhin ist es nicht einfach, möglichst gleichartige große Schieferplatten für diese Einsatzzwecke im Schieferbergbau zu gewinnen.

Bisher gibt es nur sehr wenige Lösungsansätze, um Schiefer oder auch andere Steinarten in einem Produkt möglichst dünn und damit leicht und besser verarbeitbar bereitzustellen.

DE202006019074U1, DE102016217032A1, DE102011078690A1 und JP11336293A beschreiben Schiefer auf Polymersubstraten. Keines dieser Produkte konnte sich bisher am Markt durchsetzen.

Die Aufgabe der vorliegenden Erfindung besteht darin, eine Technologie bereitzustellen, um Schiefer mit geringem Gewicht, guter Verarbeitbarkeit und guter Biegsamkeit bereitzustellen.

Diese Aufgabe wird in einer ersten Ausführungsform durch ein biegsames Dünnsteinerzeugnis mit einer außenliegenden Steinschicht gelöst, die eine Dicke im Median in einem Bereich von 10 bis 200 µm aufweist, und wenigstens einer daran angrenzenden Polymerschicht, wobei innerhalb der Polymerschicht ein Fasergebilde angeordnet ist, wobei die Steinschicht eine Schieferschicht ist und der Winkel zwischen Schieferung und Schichtung in einem Bereich von 2 bis 90° liegt.

### Dünnsteinerzeugnis

Vorzugsweise weist das Dünnsteinerzeugnis im Median eine Dicke in einem Bereich von 0,08 bis 3 mm, besonders bevorzugt im Median in einem Bereich von 0,5 bis 1 mm auf. Die Dicke ist über das Dünnsteinerzeugnis möglichst gleichbleibend, um das Dünnsteinerzeugnis besser verarbeiten und lagern zu können. Daher liegt die Standardabweichung der Dicke des Dünnsteinerzeugnisses vorzugsweise in einem Bereich von 0,005 bis 0,1 mm.

Vorzugsweise ist das Dünnsteinerzeugnis rollbar. Vorzugsweise liegt der Mindestbiegeradius des Dünnsteinerzeugnisses in einem Bereich von 2 bis 200 mm, ganz besonders bevorzugt in einem Bereich von 3 bis 50 mm. Dadurch lässt sich das Dünnsteinerzeugnis besonders leicht verpacken und transportieren. Der Mindestbiegeradius im Sinne der Erfindung ist definiert als der minimale Biegeradius, der beim Rollen des Dünnsteinerzeugnisses erzielt werden kann, ohne dass das Produkt Schaden nimmt (wie z.B. Abplatzungen oder Risse).

Vorzugsweise ist das Dünnsteinerzeugnis nicht lichtdurchlässig.

Das Flächengewicht des Dünnsteinerzeugnisses liegt vorzugsweise in einem Bereich von 0,6 bis 1,4 kg/m², ganz besonders bevorzugt in einem Bereich von 1,1 bis 1,3 kg/m². Bisherige Erzeugnisse waren in der Regel wesentlich schwerer und damit beispielsweise aufwändiger zu transportieren.

Die Rückseite des Dünnsteinerzeugnisses ist vorzugsweise nicht glatt sondern strukturiert. Hierdurch kann es besonders gut mit einem Untergrund verklebt werden. Diese Strukturierung wird vorzugsweise nicht durch ein Abziehvlies erzeugt. Vorzugsweise wird diese Strukturierung durch eine Walze erzeugt. Die Rückseite des Dünnsteinerzeugnisses weist auf ihrer Oberfläche vorzugsweise ein Polymer auf. Die Rückseite des Dünnsteinerzeugnisses weist auf ihrer Oberfläche vorzugsweise keine Fasern (beispielsweise Gelege, Gewebe oder Vlies) auf.

Vorzugsweise liegt die Fläche der Steinschicht auf der Vorderseite des Dünnsteinerzeugnisses in einem Bereich von 0,2 bis 4 m², ganz besonders bevorzugt in einem Bereich von 1 bis 3,5 m². Dadurch können beispielsweise auch größere Fassaden ohne großen Aufwand mit Schiefer verkleidet werden.

Vorzugsweise ist das Dünnsteinerzeugnis frostsicher. Dadurch sind auch Außenanwendungen möglich.

Vorzugsweise erfüllt das Dünnsteinerzeugnis die Brandklasse B1 nach DIN 4102. Dadurch kann das Dünnsteinerzeugnis beispielsweise auch auf Außenfassaden eingesetzt werden.

### Steinschicht

Der Stein ist ein Schiefer.

Die Steinschicht ist eine Schieferschicht. Die Schieferschicht besteht nicht aus Parallelschiefer sondern aus Dachschiefer. Der Winkel zwischen Schieferung und Schichtung liegt in einem Bereich von 2 bis 90°, besonders bevorzugt in einem Bereich von 10 bis 80°. Wird kein Glimmerschiefer oder Buntschiefer eingesetzt, ist das Dünnsteinerzeugnis besonders frostsicher. Dachschiefer hat darüber hinaus den Vorteil, dass dieser eine wesentlich gleichmäßigere Schieferung hat und Fehlstellen im Endprodukt so besser vermieden werden können. Zudem kann es bei Parallelschieferarten wie Buntschiefer bei der Herstellung beim Abziehen des ausgehärteten Dünnsteinerzeugnisses von der Schieferoberfläche leichter zu Rissen in der abgezogenen Steinschicht kommen. Ein weiterer Vorteil des Dachschiefers ist, dass in der Regel nur mit diesem Dachschiefer Dünnsteinerzeugnisse mit einer Fläche von mehr als 2 Quadratmetern erzeugt werden können.

Vorzugsweise liegt der Median der Schichtdicke der Steinschicht des Dünnsteinerzeugnisses in einem Bereich von 10 bis 100 µm, ganz besonders bevorzugt in einem Bereich von 30 bis 80 µm. Vorzugsweise liegt die absolute Dicke der Schichtdicke der Steinschicht an jeder Stelle des Dünnsteinerzeugnisses in einem Bereich von 1 bis 300 µm. Vorzugsweise liegt die Standardabweichung der Schichtdicke der Steinschicht in einem Bereich von 30 bis 70 µm.

Vorzugsweise erfüllt der Schiefer der Steinschicht die Anforderungen der Norm DIN EN12326.

Die Wasseraufnahme des Steins bzw. der Steinschicht liegt vorzugsweise unterhalb von 0,6 Gew.%. Dadurch hat das Dünnsteinerzeugnis eine besonders hohe Frost-Tau-Wechselbeständigkeit.

### Polymerschicht

Die Polymerschicht kann eine einzelne Polymerschicht sein. Sie kann aber auch aus mehreren Teilschichten bestehen. Die Teilpolymerschichten können beispielsweise durch Grenzflächen abgetrennt sein. Diese Grenzflächen können dadurch entstehen, dass beispielsweise zunächst eine Teilpolymerschicht aufgetragen wird und dann zumindest teilweise ausgehärtet wird. Erst anschließend kann dann beispielsweise eine weitere Teilpolymerschicht aufgetragen werden, wodurch dann die Grenzfläche entsteht. Dies hat den Vorteil, dass das Fasergebilde beispielsweise auf eine erste zumindest teilweise ausgehärtete Teilpolymerschicht aufgelegt werden kann und dann erst eine weitere Teilpolymerschicht aufgetragen wird, womit verhindert werden kann, dass das Fasergebilde direkt mit der Steinschicht in Kontakt kommt.

Die Polymerschicht enthält vorzugsweise 50 bis 100 Gew.% Polyurethan. Vorzugsweise liegt der Gehalt an Polyethern und insbesondere ausgehärtetem Epoxidharz in einem Bereich von 0 bis 1 Gew.%. Besonders bevorzugt enthält die Polymerschicht keine Polyether. Vorzugsweise liegt der Gehalt an Styrol in einem Bereich von 0 bis 1 Gew.%. Besonders bevorzugt enthält die Polymerschicht kein Styrol. Vorzugsweise liegt der Gehalt an Lösungsmittel in einem Bereich von 0 bis 1 Gew.%. Besonders bevorzugt enthält die Polymerschicht kein Lösungsmittel. Vorzugsweise liegt der Gehalt an Wasser in einem Bereich von 0 bis 1 Gew.%. Besonders bevorzugt enthält die Polymerschicht kein Wasser. Die Teilpolymerschichten können aus unterschiedlichen Materialien bestehen. Vorzugsweise bestehen sie jedoch aus demselben Material.

Besonders bevorzugt wird die Polymerschicht aus einem 2-Komponenten-Polyurethanklebstoff erhalten.

Vorzugsweise weist die Polymerschicht eine Dicke in einem Bereich von 0,08 bis 3 mm, besonders bevorzugt in einem Bereich von 0,5 bis 1 mm auf.

Die Polymerschicht kann wie oben dargestellt aus Teilpolymerschichten bestehen. Diese Teilpolymerschichten weisen vorzugsweise jeweils eine Dicke in einem Bereich von 0,08 bis 1 mm, besonders bevorzugt in einem Bereich von 0,15 bis 0,4 mm auf. Vorzugsweise ist die erste an die Steinschicht angrenzende Teilpolymerschicht dicker als die übrigen Teilpolymerschichten.

Vorzugsweise weist die Polymerschicht einen Weißgrad in einem Bereich von 0 bis 20 auf. Ganz besonders bevorzugt ist die Polymerschicht schwarz. Der Weißgrad kann nach DIN ISO 2470-2 beispielsweise mit dem Gerät Weißgrad-Messgerät PCE-WSB 1 gemessen werden. Dadurch, dass die Polymerschicht sehr dunkel ist bzw. sogar schwarz ist, ist die Polymerschicht nicht lichtdurchlässig und Defekte auf der Stein- bzw. Schieferoberfläche fallen nicht leicht auf.

Die Dichte der Polymerschicht liegt vorzugsweise in einem Bereich von 1,2 bis 1,5 g/cm³ und kann beispielsweise nach DIN 53479 gemessen werden.

Die Shore D Härte der Polymerschicht liegt vorzugsweise in einem Bereich von 60 bis 100 und kann beispielsweise nach DIN 53505 gemessen werden.

Die Viskosität des unausgehärteten Harzes für die Polymerschicht liegt vorzugsweise in einem Bereich von 0,5 bis 2000 mPa·s. Dies hat den Vorteil, dass das Harz dann mittels Sprühauftrag aufgetragen werden kann.

Vorzugsweise enthält das unausgehärtete Harz zum Erhalt der Polymerschicht einen Katalysator beispielsweise zur Einstellung der Aushärtezeit. Der Katalysator wird vorzugsweise einer Polyolkomponente zugesetzt. Dadurch kann die Aushärtezeit besonders leicht eingestellt werden.

Vorzugsweise enthält die Polymerschicht ein Brandschutzmittel. Dies hat den Vorteil, dass das Dünnsteinerzeugnis dann beispielsweise auch für die Verkleidung von Fassaden eingesetzt werden kann.

### Fasergebilde

Vorzugsweise ist das Fasergebilde ein Gewebe. Dadurch kann es eine gute und gleichmäßige Durchdringung mit dem Harz und einen definierten Harzauftrag geben. Daher ist das Fasergebilde vorzugsweise auch kein Wirrvlies oder Wirrfasergelege.

Das Fasergebilde besteht vorzugsweise aus anorganischem Material und ganz besonders bevorzugt aus Glas. Dadurch können besonders gute mechanische Kennwerte des erfindungsgemäßen Erzeugnisses und eine besonders gute Brandfestigkeit erreicht werden.

Der Abstand zwischen dem Fasergebilde und der Steinschicht liegt vorzugsweise in einem Bereich von 0,05 bis 0,7 mm. Das Fasergebilde berührt die Steinschicht vorzugsweise nicht. Dadurch kann besonders leicht vermieden werden, dass das Gewebe durch die dünne Steinschicht sichtbar ist.

Vorzugsweise ist das Fasergebilde hinter der Rückseite der Steinschicht angeordnet. Besonders bevorzugt ist das Fasergebilde nämlich in der Polymerschicht eingebettet.

### Weitere Ausführungsformen

In einer weiteren Ausführungsform wird die der Erfindung zu Grunde liegende Aufgabe durch ein Verfahren zur Herstellung des erfindungsgemäßen Dünnsteinerzeugnisses entsprechend Anspruch 1 gelöst, bei dem wenigstens folgende Schritte ausgeführt werden:
a) Auftragen eines noch nicht ausgehärteten Polymerharzes auf eine Steinoberfläche,
b) Auflegen eines Fasergebildes auf das aufgetragene Polymerharz,
c) Erneutes Auftragen eines noch nicht ausgehärteten Polymerharzes,
d) Aushärten des Polymerharzes,
e) Abziehen des ausgehärteten Polymerharzes mit dem Fasergebilde von der Steinoberfläche, wobei eine mit dem ausgehärteten Polymerharz verklebte Steinschicht von der Steinoberfläche mit abgezogen wird und so das Dünnsteinerzeugnis entsteht.

Die Steinschicht ist eine Schieferschicht und der Winkel zwischen Schieferung und Schichtung liegt in einem Bereich von 2-90°. Folglich handelt es sich beim Dünnsteinerzeugnis um ein Dünnschiefererzeugnis, der Steinoberfläche um eine Schieferoberfläche und bei der Steinschicht um eine Schieferschicht.

Das erfindungsgemäße Verfahren hat vorzugsweise 3 bis 5 Prozesschritte. Schritt e) wird vorzugsweise über eine Trommel oder Walze durchgeführt. Dafür wird das ausgehärtete Polymerharz mit dem Fasergebilde vorzugsweise über die gesamte Breite an einer der vier Kanten in einer Haltevorrichtung der Walze oder Trommel befestigt und dann durch Abrollen der Walze oder Trommel abgezogen. Die Haltevorrichtung kann beispielsweise ein Klemmspalt sein.

Schritt e) findet vorzugsweise bei einer Temperatur der Polymerschicht in einem Bereich von 5 bis 35 °C statt. Es kann also beispielsweise nötig sein, die Polymerschicht zunächst vor dem Abziehen abzukühlen. Dies kann beispielsweise mit kalter Luft geschehen. Wenn die Temperatur oberhalb dieses Bereiches liegt, kann es zu Delamination der Schichten bzw. Teilschichten kommen.

In Schritt e) wird die Steinschicht vorzugsweise mechanisch und besonders bevorzugt nicht chemisch von der Steinoberfläche gelöst. Dies ist beispielsweise dadurch möglich, dass ein Polymer eingesetzt wird, das sich in der Oberflächenstruktur des Steins verkrallen kann.

In den Schritten a) und/oder c) wird das nicht ausgehärtete Polymerharz vorzugsweise mit einer Temperatur in einem Bereich von 40 bis 100 °C eingesetzt. Die Viskosität des Polymerharzes wird durch den Wärmeeintrag stark herabgesetzt wodurch sich die Verarbeitungseigenschaften ändern. Das Fasergebilde wird deutlich besser getränkt und eingearbeitete Luftblasen können leichter entweichen.

Die Menge an aufgetragenem Harz in den Schritten a) und c) weicht vorzugsweise voneinander 0 bis 100% ab. Es wird also vorzugsweise in einem der Auftragsschritte maximal doppelt so viel Harz wie in dem anderen Auftragsschritt aufgetragen.

Die Steinoberfläche ist eine Schieferplatte. Besonders bevorzugt wird die Steinplatte zumindest auf deren Oberfläche vor Durchführung des Schrittes a) auf eine Temperatur in einem Bereich von 40 bis 100 °C erwärmt. Vorzugsweise wird zum Rand der Steinoberfläche ein Rand, eine Breite in einem Bereich von 1 bis 15 cm gelassen. Die Steinplatte hat vorzugsweise eine Dicke in einem Bereich von 1 bis 20 cm.

Vorzugsweise wird das Polymerharz in Schritt a) und/oder in Schritt c) mittels Sprühen und ganz besonders bevorzugt durch luftloses Sprühen aufgetragen. Sprühen hat den Vorteil, dass ein besonders gleichmäßiger Auftrag möglich ist. Luftloses Sprühen hat den Vorteil, dass weniger Gasblasen in die aufgetragene Schicht eingelagert werden.

Vorzugsweise wird das Polymerharz u.a. aus Polyol und Isocyanat gebildet. Diese Komponenten werden vorzugsweise erst unmittelbar vor dem Auftrag gemischt. Beispielsweise befindet sich ein Mischkopf unmittelbar vor der Düse oder die Düse ist in den Mischkopf integriert.

Zwischen Schritt a) und b) wird vorzugsweise solange gewartet, bis das Harz angeliert ist, besonders bevorzugt ein Vernetzungsgrad von wenigstens 0,1% erreicht ist. Dies kann beispielsweise durch Wärmeeintrag beschleunigt werden.

Schritt d) wird vorzugsweise zumindest teilweise in einem Ofen durchgeführt. Hierbei wird die Temperatur des Ofens beispielsweise auf eine Temperatur in einem Bereich von 60 bis 100 °C eingestellt.

Vorzugsweise wird in Schritt a) eine spaltraue Schieferoberfläche eingesetzt. Ganz besonders bevorzugt ist die Schieferoberfläche nicht geschliffen.

Vorzugsweise wird das Verfahren kontinuierlich durchgeführt.

In einer weiteren Ausführungsform wird die der Erfindung zu Grunde liegende Aufgabe durch die Verwendung des erfindungsgemäßen Dünnsteinerzeugnisses für Fahrzeuginnenverkleidung, Fassadenverkleidung, Wohnraumverkleidung, und als Furnierersatz.

### Ausführungsbeispiel

Als Harz für die Polymerschicht wurde PU NEUKADUR PN 9712 2-K-Polyurethan-Klebstoff der Firma Altropol Kunststoff GmbH eingesetzt. Eine Schieferplatte mit den Abmaßen 125 cm x 60 cm wurde nach dem üblichen Prozessablauf laminiert und erfuhr nach jedem Klebstoffauftrag Strahlungswärme von 4 in ca. 70 cm Entfernung über der Platte befindlichen Heizstrahlern. Die Oberflächentemperatur wurde maximal auf 80 bis 100°C eingestellt. Als Fasergebilde wurde eine handelsübliche Glasfasergewebematte eingesetzt. Die erste Klebschicht wurde soweit vernetzt, dass ein Hindurchdrücken der darauf aufgelegten Gewebematte bis auf den Schiefer nicht erreicht werden konnte. Nach einiger Zeit war die erste Klebschicht soweit vernetzt, dass der zweite Schichtauftrag erfolgen konnte. Die Strahler blieben so lange an, bis die zweite darauf aufgetragene Klebschicht vollständig vernetzt war. Nach wiederum einiger Zeit unter Strahlungswärme war der Klebstoff klopffest abgebunden. Danach erfolgte der Abzug des Furniers von der Schieferplatte. Der Abzug des Furniers wurde bei einer Oberflächentemperatur von < 35°C durchgeführt, indem die gesamte Oberkante des Schichtverbundes der Polymerschicht mit dem Gewebe in einem Klemmspalt einer Walze festgeklemmt wurde und dann die Walze durch Abrollen langsam und vorsichtig das fertige Dünnsteinerzeugnis mit einer abgezogenen Steinschicht erzeugte.

Der zeitliche Ablauf war wie folgt:
- erster Klebstoffauftrag
- Heizen bei etwa 80°C Oberflächentemperatur
- Auflegen des Gewebes
- Laminieren (zweiter Klebstoffauftrag)
- Heizen bei etwa 80°C Oberflächentemperatur
- einige Stunden ruhen lassen
- Abziehen

## Patentansprüche

1. Biegsames Dünnsteinerzeugnis mit einer außenliegenden Steinschicht, die eine Dicke im Median in einem Bereich von 10 bis 200 µm aufweist, und wenigstens einer daran angrenzenden Polymerschicht, wobei innerhalb der Polymerschicht ein Fasergebilde angeordnet ist, wobei die Steinschicht eine Schieferschicht ist und der Winkel zwischen Schieferung und Schichtung in einem Bereich von 2 bis 90° liegt.

2. Dünnsteinerzeugnis gemäß Anspruch 1, **dadurch gekennzeichnet, dass** die Polymerschicht aus einem 2-K-Polyurethan-Klebstoff gebildet wird.

3. Dünnsteinerzeugnis gemäß einem der vorhergehenden Ansprüche, **dadurch gekennzeichnet, dass** der Abstand zwischen dem Fasergebilde und der Steinschicht in einem Bereich von 0,05 bis 0,7 mm liegt.

4. Dünnsteinerzeugnis gemäß einem der vorhergehenden Ansprüche, **dadurch gekennzeichnet, dass** das Fasergebilde ein Gewebe ist.

5. Dünnsteinerzeugnis gemäß einem der vorhergehenden Ansprüche, **dadurch gekennzeichnet, dass** die Dicke des Dünnsteinerzeugnisses in einem Bereich von 0,5 bis 1 mm liegt.

6. Dünnsteinerzeugnis gemäß einem der vorhergehenden Ansprüche, **dadurch gekennzeichnet, dass** das Dünnsteinerzeugnis rollbar ist und insbesondere der Mindestbiegeradius des Dünnsteinerzeugnisses in einem Bereich von 2 bis 200 mm liegt.

7. Dünnsteinerzeugnis gemäß einem der vorhergehenden Ansprüche, **dadurch gekennzeichnet, dass** die Polymerschicht einen Weißgrad in einem Bereich von 0 bis 20 gemessen nach DIN ISO 2470-2 aufweist.

8. Verfahren zur Herstellung eines Dünnsteinerzeugnisses gemäß einem der Ansprüche 1 bis 7, bei dem wenigstens folgende Schritte ausgeführt werden:
a. Auftragen eines noch nicht ausgehärteten Polymerharzes auf eine Steinoberfläche,
b. Auflegen eines Fasergebildes auf das aufgetragene Polymerharz,
c. Erneutes Auftragen eines noch nicht ausgehärteten Polymerharzes,
d. Aushärten des Polymerharzes,
e. Abziehen des ausgehärteten Polymerharzes mit dem Fasergebilde von der Steinoberfläche, wobei eine mit dem ausgehärteten Polymerharz verklebte Steinschicht von der Steinoberfläche mit abgezogen wird und so das Dünnsteinerzeugnis entsteht.

9. Verfahren gemäß Anspruch 8, **dadurch gekennzeichnet, dass** das Polymerharz in Schritt a) und/oder in Schritt c) mittels Sprühen aufgetragen wird.

10. Verwendung des Dünnsteinerzeugnisses gemäß einem der Ansprüche 1 bis 7, für Fahrzeuginnenverkleidung, Fassadenverkleidung, Wohnraumverkleidung, und als Furnierersatz.

## Claims

1. Flexible thin stone product comprising an outer stone layer having a median thickness in a range from 10 to 200 µm and at least one polymer layer adjacent thereto, wherein a fibrous structure is disposed within the polymer layer, wherein the stone layer is a slate layer and the angle between the foliated structure and the lamination is in a range of 2 to 90°.

2. Thin stone product according to claim 1, **characterized in that** the polymer layer is formed from a 2-K polyurethane adhesive.

3. Thin stone product according to any one of the preceding claims, **characterized in that** the distance between the fibrous structure and the stone layer is in a range from 0.05 to 0.7 mm.

4. Thin stone product according to any one of the preceding claims, **characterized in that** the fibrous structure is a woven fabric.

5. Thin stone product according to any one of the preceding claims, **characterized in that** the thickness of the thin stone product is in a range from 0.5 to 1 mm.

6. Thin stone product according to any one of the preceding claims, **characterized in that** the thin stone product is rollable and, in particular, the minimum bending radius of the thin stone product is in a range from 2 to 200 mm.

7. Thin stone product according to any one of the preceding claims, **characterized in that** the polymer layer has a degree of whiteness in a range from 0 to 20 measured according to DIN ISO 2470-2.

8. Method for producing a thin stone product according to any one of claims 1 to 7, in which at least the following steps are carried out:
a. applying a yet uncured polymer resin onto a stone surface;
b. laying a fibrous structure onto the applied polymer resin;
c. reapplying a yet uncured polymer resin;
d. curing the polymer resin;
e. peeling off the cured polymer resin with the fibrous structure from the stone surface, wherein a stone layer bonded with the cured polymer resin is also peeled off the stone surface, thus forming the thin stone product;

9. Method according to claim 8,
**characterized in that** the polymer resin is applied by spraying in step a) and/or in step c).

10. Use of the thin stone product according to any one of claims 1 to 7 for vehicle interior trim, facade cladding, residential cladding and as a veneer substitute.

## Revendications

1. Produit de pierre fine flexible comprenant une couche de pierre externe présentant une épaisseur moyenne dans une plage de 10 à 200 µm et au moins une couche de polymère adjacente à la couche de pierre, dans lequel une structure en fibre est agencée dans la couche de polymère, la couche de pierre étant une couche d'ardoise et l'angle entre schistosité et stratification étant compris dans la plage de 2° à 90°.

2. Produit de pierre fine selon la revendication 1, **caractérisé en ce que** la couche de polymère est formée d'un adhésif de polyuréthane 2K.

3. Produit de pierre fine selon l'une quelconque des revendications précédentes, **caractérisé en ce que** la distance entre la structure en fibre et la couche de pierre est comprise dans une plage de 0,05 à 0,7 mm.

4. Produit de pierre fine selon l'une quelconque des revendications précédentes, **caractérisé en ce que** la structure en fibre est un tissu.

5. Produit de pierre fine selon l'une quelconque des revendications précédentes, **caractérisé en ce que** l'épaisseur du produit de pierre fine est comprise dans une plage de 0,5 à 1 mm.

6. Produit de pierre fine selon l'une quelconque des revendications précédentes, **caractérisé en ce que** le produit de pierre fine est enroulable est notamment le rayon de courbure du produit de pierre fine est compris dans une plage de 2 à 200 mm.

7. Produit de pierre fine selon l'une quelconque des revendications précédentes, **caractérisé en ce que** la couche de polymère présente un degré de blancheur dans une plage de 0 à 20 selon DIN ISO 2470-2.

8. Procédé pour la fabrication d'un produit de pierre fine selon l'une quelconque des revendications 1 à 7, dans lequel au moins les étapes suivantes sont effectuées :
a. dépôt d'une résine de polymère pas encore durcie sur une surface de pierre,
b. application d'une structure en fibre sur la résine de polymère déposée,
c. nouveau dépôt d'une résine de polymère pas encore durcie,
d. durcissement de la résine de polymère,
e. enlèvement de la résine de polymère durcie avec la structure en fibre de la surface de pierre, une couche de pierre collée avec la résine de polymère durcie étant enlevée avec de la surface de pierre de sorte que le produit de pierre fine soit produit.

9. Procédé selon la revendication 8, **caractérisé en ce que** la résine de polymère dans l'étape a) et/ou dans l'étape c) est déposée par pulvérisation.

10. Utilisation du produit de pierre fine selon l'une quelconque des revendications 1 à 7 pour le revêtement interne d'automobiles, le revêtement de façades, le revêtement de pièces d'habitation, et en tant que substitut de placage.
